# FASCICULE DE BREVET EUROPEEN

(11) **EP 0 757 008 B1**
(45) Date de publication et mention de la délivrance du brevet: **26.04.2000**
(21) Numéro de dépôt: 96203087.0
(22) Date de dépôt: 12.12.1995
(51) Int. Cl.: B65D 90/50

(54) **Citerne à détecteur**
Tankbehälter mit Detektor
Tank container with deflector

(30) Priorité: 22.12.1994 FR 9415474
(43) Date de publication de la demande: 05.02.1997
(62) Demande divisionnaire de: 95402794.2
(73) Titulaire: Société Metallurgique Liotard Frères, Société Anonyme, 75008 Paris (FR)
(72) Inventeur: Bouvier, Daniel, 75011 Paris (FR)
(74) Mandataire: Eidelsberg, Victor Albert

(56) Documents cités:
- FR-A- 1 551 051
- PATENT ABSTRACTS OF JAPAN vol. 8, no. 68 (P-264) [1505] , 30 mars 1984 & JP 58 215520 A (TOKYO SHIBAURA DENKI K.K.), 15 décembre 1983,

## Description

La présente invention concerne des citernes munies de dispositifs de contrôle de la cuve en un matériau corrodable, en particulier des citernes enterrées.

On connaît des dispositifs de détection de fuite dans une citerne. Par exemple le brevet français n° 1 551 051 qui décrit une cuve qui comporte une peau interne, un détecteur de présence de liquide étant disposé sur la surface intérieure du fond de la cuve. Ce genre de dispositif présente l'inconvénient, d'une part, de ne pas protéger la surface extérieure de la cuve de la corrosion provenant de l'humidité à l'extérieur de la cuve et, d'autre part, ne permet pas de détecter l'apparition d'eau dès que celle-ci a lieu dans l'espace intermédiaire. Le document Patent Abstract of Japan, Vol. 8 Number 68 (page 264) du 30 mars 1984, décrit également une cuve entourée d'une paroi en béton, un évidement ayant été ménagé dans l'intervalle entre la paroi en béton et la cuve dans lequel est disposé un détecteur d'eau. Cependant, ce dispositif présente l'inconvénient de ne pas prévenir l'utilisateur de l'apparition d'humidité dès que celle-ci apparaît, mais, comme dans le cas du dispositif décrit au brevet français n° 1 551 051, uniquement après un certain temps pendant lequel la corrosion peut avoir déjà trop progressé.

L'invention pallie les inconvénients de l'art antérieur par un dispositif pour prévenir la corrosion de la cuve d'une citerne qui, tout en étant bien moins compliqué à mettre en oeuvre qu'auparavant, permet de prévenir l'utilisateur avant même que la corrosion de la citerne n'apparaisse et permet ainsi de conserver la citerne pendant une durée de vie quasiment illimitée.

L'invention vise une citerne suivant la revendication 1.

L'enveloppe peut être un matériau non corrodable et résister moins à la pression que la cuve. Elle est notamment en matière plastique.

Pour mesurer dans l'atmosphère de l'enceinte, un taux d'humidité extrêmement faible, du fait des températures très basses qu'atteint la citerne en raison de l'évaporation du gaz liquéfié qu'elle contient, un perfectionnement de l'invention consiste à remplir l'enceinte étanche d'un fluide anhydre (air, azote par exemple), permettant ainsi de protéger la surface extérieure de la cuve de l'humidité ambiante dans l'enceinte étanche. On entend par fluide anhydre, un fluide qui ne contient pas d'eau liquide et dont la teneur en vapeur d'eau est trop faible pour qu'une condensation se produise.

Afin de pouvoir mesurer des traces d'humidité, le détecteur de la citerne selon l'invention peut être constitué d'une couche de sel hygroscopique (chlorure, nitrate, sulfate de métal alcalin ou analogue) que l'on fixe sur la surface extérieure de la cuve par un moyen de fixation connu (colle, sertissage, etc ...) et avec laquelle on met en contact intime deux électrodes à distance l'une de l'autre en un matériau inoxydable (or, platine, ou analogue) ou plaquées avec un matériau de ce genre.

Le sel hygroscopique a une conductivité très faible sous forme cristallisée qui devient beaucoup plus grande lorsqu'il est en solution. Du courant électrique ne peut pas passer entre les deux électrodes tant que le sel hygroscopique est sous forme cristallisée. Lorsque de l'eau de condensation apparaît, le sel se solubilise et du courant peut passer entre les deux électrodes.

En reliant par deux conducteurs les électrodes à un moyen d'informations constitué d'un circuit électrique comprenant une source de courant électrique et un moyen de détection du passage du courant, on peut savoir que de l'eau de condensation est apparue.

Généralement, la cuve d'une citerne est en un matériau corrodable qui conduit l'électricité. Pour que du courant ne puisse pas passer entre les électrodes par l'intermédiaire de la cuve de la citerne, ont doit s'assurer, lorsqu'on monte les électrodes en contact intime avec la couche de sel, que cette couche de sel isole totalement les électrodes de la surface extérieure de la cuve.

Un perfectionnement du détecteur d'une citerne selon l'invention consiste à placer entre la surface extérieure de la cuve et la couche de sel une membrane conductrice de la chaleur mais isolante électriquement. Cette membrane permet de s'assurer de l'isolement électrique des électrodes par rapport à la surface extérieure de la cuve, tout en réalisant une conduction thermique qui assure que la couche de sel est à une température égale à celle de la surface extérieure de la cuve.

Un perfectionnement du détecteur consiste à placer une pièce de fixation amovible, notamment un aimant, entre cette membrane et la surface extérieure de la cuve.

Grâce à cet aimant, le détecteur peut être monté aisément sous la cuve simplement en plaquant l'aimant qui supporte alors le détecteur contre la cuve. De même, on peut retirer simplement le détecteur de la cuve en éloignant l'aimant de la citerne.

Dans la pratique, il convient d'avoir accès aisément aux données fournies par le détecteur, alors pourtant que la détection est réalisée à l'intérieur de l'enveloppe étanche, de préférence sous le fond même de la cuve, elle-même enterrée.

Un perfectionnement de l'invention permet de résoudre ce problème en plaçant le moyen d'information à l'extérieur de l'enceinte étanche, et de manière qu'il soit aisément accessible par l'utilisateur.

Afin d'améliorer encore plus la résolution du détecteur, c'est-à-dire la quantité minimale d'eau nécessaire pour qu'un courant soit visible sur le moyen de détection du passage de courant, on adjoint, selon un perfectionnement de l'invention, au circuit électrique un moyen destiné à amplifier le courant qui passe par les électrodes lorsque le sel est devenu conducteur.

Selon un mode de réalisation de l'invention, ce moyen d'amplification consiste en un transistor (par exemple de type 2 N 222), dont la base est reliée à une électrode, tandis que la branche constituée de source de courant électrique et du moyen de détection du passage du courant est montée entre le collecteur et l'émetteur, le collecteur étant également relié à l'autre électrode. Ainsi lorsqu'un courant entre dans la base du transistor, il en ressort amplifié par l'émetteur avant de passer dans le détecteur de passage de courant.

Selon l'invention, le détecteur est muni d'un moyen de mémorisation du fait que du courant est passé entre les électrodes et que, donc, de l'eau est apparue sur la surface extérieure de la cuve.

Cette mémorisation permet à l'utilisateur de la citerne d'être informé que de l'eau est apparue à un moment donné sans avoir à consulter à ce moment précis le moyen d'information. Ce moyen de mémorisation est particulièrement utile dans les cas où le détecteur détecte une apparition d'eau alors que l'utilisateur n'est pas en train de s'informer et que, avant que l'utilisateur ne vienne s'informer, cette eau disparaît.

Le circuit électrique d'un mode de réalisation d'un détecteur muni d'un tel moyen de mémorisation est constitué d'un tripôle, par exemple un transistor, ayant la propriété que, si du courant entre par un premier pôle, le dipôle constitué des deuxième et troisième pôles est conducteur et que, si du courant n'entre pas par le premier pôle, le dipôle n'est pas conducteur, le premier pôle étant relié à une électrode, un pôle parmi les deuxième et troisième pôles étant relié à l'autre électrode, d'un interrupteur de mémorisation commandé par le courant, initialement en position ouverte et qui passe en position fermée lorsque du courant sort du pôle du tripole qui n'est pas relié à une électrode, d'une source de courant électrique et d'un moyen de détection de passage de courant, le pôle du tripôle non relié à une électrode étant relié à une des bornes de source de courant électrique et à une des bornes de l'interrupteur, l'autre borne de l'interrupteur étant reliée au moyen de détection du passage de courant, lui-même relié au pôle du dipôle qui est relié à une électrode et à l'autre borne de source de courant électrique.

Dans ce montage, le moyen de mémorisation est constitué de l'interrupteur de mémorisation commandé par le courant. La lampe servant de moyen de détection du passage du courant reste alors allumée en permanence, en étant alimentée par la source de courant électrique.

Dans la pratique, la source de courant électrique va se décharger rapidement, si on la laisse débiter ainsi en permanence. Si cette décharge a lieu avant que l'utilisateur vienne s'informer, la lampe se sera éteinte du fait de cette décharge et il en conclura à tort que la citerne fonctionne convenablement.

Afin de protéger la source de courant électrique d'une telle décharge, un perfectionnement de l'invention consiste à placer dans le circuit électrique un moyen destiné à empêcher la source de courant électrique de débiter du courant dès après qu'un courant a été détecté.

Un mode de réalisation du circuit électrique muni d'un tel moyen est le suivant : il est constitué d'un tripôle, par exemple un transistor, ayant la propriété que, si du courant entre par un premier pôle, le dipôle constitué des deuxième et troisième pôles est conducteur et que, si du courant n'entre pas par le premier pôle, le dipôle n'est pas conducteur, le premier pôle étant relié à une électrode, un pôle parmi les deuxième et troisième pôles étant relié à l'autre électrode, d'un interrupteur de mémorisation excité par le courant, initialement en position ouverte et qui passe en position fermée lorsque du courant sort du pôle du tripole qui n'est pas relié à une électrode, d'une source de courant électrique et d'un moyen de détection de passage de courant, le pôle du tripôle non relié à une électrode étant relié à une des bornes de source de courant électrique et à une des bornes de l'interrupteur, l'autre borne de l'interrupteur étant reliée au moyen de détection du passage de courant, lui-même relié au pôle du dipôle qui est relié à une électrode et à l'autre borne de source de courant électrique., un interrupteur de non débit à deux positions ouverte et fermée, initialement en position fermée et qui passe en position ouverte lorsqu'il est excité par du courant étant monté entre le pôle du tripôle qui n'est pas relié à une électrode et l'entrée du premier interrupteur à deux positions commandé par le courant et un interrupteur manuel commandant le passage du courant dans le moyen de détection du passage de courant.

Grâce à ce montage, la source de courant électrique ne débite du courant que pendant le très court laps de temps entre le moment où le sel devient conducteur et le moment où l'interrupteur de mémorisation s'ouvre.

L'avantage de ce montage est qu'après qu'une condensation d'eau a été détectée, la source de courant ne débite plus de courant mais l'utilisateur est néanmoins informé que de l'eau est apparue pendant son absence. En effet, l'interrupteur de mémorisation commandé par le courant s'est bien fermé et lorsque l'utilisateur ferme l'interrupteur manuel, la source de courant électrique redébite dans le moyen de détection de passage de courant et avertit l'utilisateur que du courant est passé dans le circuit pendant son absence.

Un autre mode de réalisation consiste à remplacer les deux interrupteurs excités par le courant par un relais bistable à deux branches, chaque branche ayant deux positions ouverte et fermée, la première étant initialement en position fermée et la seconde initialement en position ouverte et la première s'ouvrant et la seconde se fermant lorsque le courant entre dans le relais bistable.

Ainsi, lorsque le sel devient conducteur, un courant entre dans l'interrupteur de mémorisation excité par le courant (la branche du relais), qui est initialement fermé, ce qui a pour effet de l'ouvrir, tandis que le second (la seconde) se ferme.

Il peut également arriver que le détecteur se détache de la surface extérieure de la cuve.

Un perfectionnement du détecteur de la citerne selon l'invention consiste à munir ce détecteur d'un moyen indicateur du fait qu'il s'est détaché de la cuve.

Un mode de réalisation d'un détecteur muni d'un tel moyen indicateur comprend comme moyen indicateur un interrupteur à ressort bandé entre la surface extérieure de la cuve et une butée solidaire du détecteur, et des conducteurs le reliant à chaque électrode.

Ainsi lorsque le détecteur et sa butée solidaire s'éloignent de la surface de la cuve, l'interrupteur à ressort se détend et se ferme pour laisser passer le courant. Tout se passe ensuite comme si le détecteur avait détecté une apparition d'eau et l'utilisateur est averti par le moyen de détection du passage du courant qu'une anomalie est apparue dans le détecteur.

Lorsque le détecteur ne détecte rien, ce peut être parce que il n'apparaît pas de condensation d'eau mais aussi parce que le moyen d'information est défectueux.

Afin de fournir à l'utilisateur un signal l'avertissant d'une anomalie du moyen d'information, un perfectionnement de la citerne selon l'invention consiste en deux conducteurs reliés à l'extérieur de l'enveloppe étanche par un interrupteur de vérification et reliés à l'intérieur de l'enveloppe chacun à l'une des électrodes. Cela permet, lorsqu'on ferme l'interrupteur de vérification, de faire comme si de l'eau apparaissait sur la surface extérieure de la cuve et de vérifier ainsi que le moyen d'information fonctionne normalement. Si tel n'est pas le cas, l'utilisateur sait, qu'une anomalie existe et qu'une intervention est nécessaire.

Une variante d'une citerne comprenant un dispositif pour avertir l'utilisateur qu'une anomalie entrave son bon fonctionnement consiste en un détecteur qui comprend un sel hygroscopique, deux électrodes reliées entre elles par une résistance, de valeur inférieure à celle constituée par le sel non dissous est supérieure à celle constituée par le sel dissous, et de préférence une gaine en matériau de synthèse choisi pour ses propriétés de forte absorption d'eau et faible désorption d'eau. Un exemple non limitatif d'un matériau adéquat est un polyamide (type nylon).

Lorsque des condensations se produisent sur la surface extérieure de la cuve de la citerne, l'eau condensée pénètre avec facilité le matériau de la gaine et modifie la résistance du sel hygroscopique en l'amenant à une valeur inférieure à celle de la résistance placée entre les deux électrodes. De cette façon, la constatation de la présence de condensation peut être vérifiée par une simple mesure de résistance.

Trois cas peuvent se présenter :
1°) la valeur de la résistance globale est supérieure à celle de la résistance mise en série avec les électrodes : l'appareil est en défaut par suite d'une rupture de circuit,
2°) la valeur de la résistance globale correspond à celle de la résistance mise en série avec les électrodes : le capteur fonctionne et il n'y a pas eu de condensation ;
3°) la valeur de la résistance globale est inférieure à celle de la résistance mise en série : il y a eu condensation.

Un simple ohmètre permet le contrôle à la fois du circuit et de la présence de condensation.

Au dessin annexé donné uniquement à titre d'exemple,
la figure 1 est une vue schématique en coupe d'une citerne selon l'invention.
la figure 2 est une vue schématique en coupe d'un mode de réalisation préféré du détecteur selon l'invention.
la figure 3 est un schéma d'un mode de réalisation préféré du circuit électrique de la citerne selon l'invention, correspondant à la partie qui est à l'extérieur de l'enveloppe étanche.
la figure 4 est un schéma d'un autre mode de réalisation possible du détecteur.

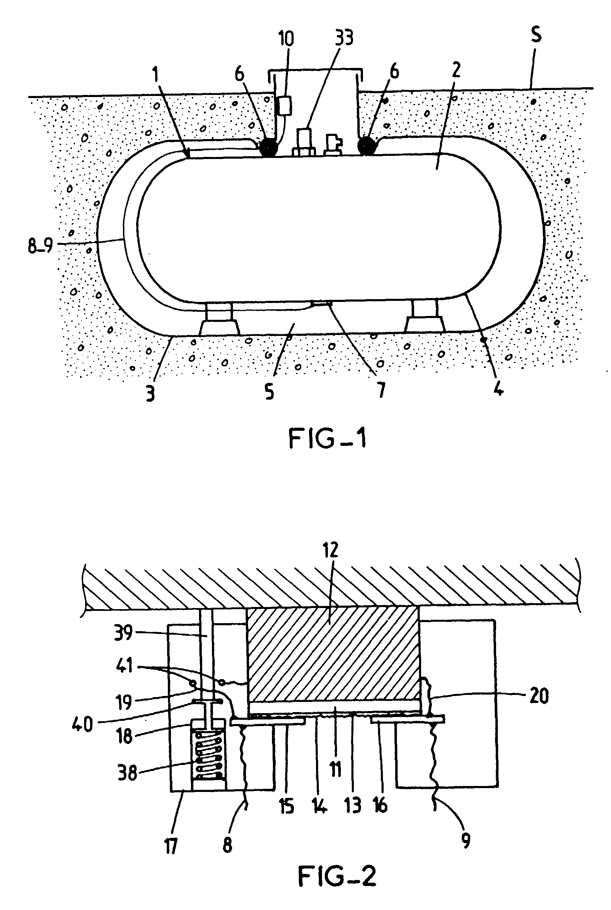

La citerne représentée à la figure 1 est désignée dans son ensemble par la référence 1. Elle comporte une cuve 2 en acier entourée d'une enveloppe 3 en un matériau non corrodable, par exemple une matière plastique, tel que le polyéthylène, qui définit avec la surface extérieure 4 de la cuve 2 une enceinte 5 étanche dont l'étanchéité est assurée par des joints 6 d'étanchéité. Une entrée (non représentée), munie d'un bouchon permet d'introduire du gaz ou du fluide anhydre dans l'enceinte 5.

Sous le fond de la cuve 2, est monté un détecteur 7 de l'apparition d'eau relié par des conducteurs 8,9 à un moyen d'information 10 permettant de savoir si le détecteur 7 a détecté une condensation. Ce moyen d'information 10 est aisément accessible à l'utilisateur de la citerne en étant proche de la surface du sol S.

Le détecteur (figure 2) est constitué d'une membrane 11, isolante électriquement et conductrice thermiquement, par exemple SILPAD 400 fabriqué par la société BERGQUIST, dont l'une des faces est en contact permanent avec la surface extérieure 4 de la cuve par l'intermédiaire d'un aimant 12, conducteur de la chaleur, tandis que l'autre face 13 est recouverte d'une couche 14 de sel hygroscopique (LiCl, NaCl, ou analogue), dont la conductibilité en solution est beaucoup plus grande que sous forme cristallisée. Dans cette couche sont montées deux électrodes 15, 16 en un matériau inoxydable (or, platine ou analogue), disposées en contact intime avec la face 13 de la membrane 11. Un boîtier 17 plastique recouvre la partie intérieure à l'enceinte du détecteur pour protéger la couche de sel hygroscopique et peut servir de réserve de sel hygroscopique.

Un interrupteur 18 à ressort a son ressort 38 monté comprimé entre le fond du boîtier 17 formant butée et la surface extérieure 4 de la cuve avec interposition d'un poussoir 39 muni d'une palette 40. Lorsque le ressort 38 se détend parce que le fond 17 s'éloigne de la surface 4, la palette 40 conductrice vient en contact avec deux bornes 41, et est relié par deux conducteurs 19,20 à chacune des électrodes. Deux conducteurs 8,9 relient les électrodes au moyen 10 d'information après avoir traversé l'enveloppe étanche 3 par des orifices étanches.

Ce moyen 10 d'information comprend un circuit électrique 21 branché aux bornes des conducteurs 8,9 issus des électrodes.

Le conducteur 8 est relié à la base d'un transistor 22, dont l'émetteur est relié à une première branche 23a d'un relais bistable 23 à deux positions NF et NO. Cette branche de relais bistable 23a est reliée par un fil électrique d'une part à une borne d'une source de courant électrique 24 et d'autre part à la seconde branche du relais bistable 23b à deux positions NF et NO. Cette dernière est reliée par un fil électrique à une lampe 25, servant de moyen de détection du passage du courant ,elle-même reliée à un interrupteur 26 manuel relié lui-même au collecteur du transistor 20. La deuxième borne de source de courant électrique 24 est également reliée au collecteur du transistor 22. Une branche comprenant un interrupteur 27 de remise à zéro et une bobine 28 auxiliaire est montée entre la borne de source de courant électrique qui est également reliée au relais bistable 23. La bobine 29 fait partie du relais bistable 23.

Deux autres conducteurs 30,31 sont montés aux bornes des électrodes 15,16 et reliés, après avoir traversé de façon étanche l'enveloppe 3, par un interrupteur 32 de vérification.

On introduit par une entrée 33 le liquide ou gaz à stocker dans la cuve de la citerne, par exemple un gaz de pétrole liquéfié et un gaz ou un fluide anhydre dans l'enceinte 5 étanche. L'étanchéité de l'enceinte 5 permet de s'assurer que la surface extérieure 4 de la cuve 2 n'est jamais soumise à une atmosphère humide, ce qui la protège contre la corrosion. Si néanmoins, de l'humidité parvient à s'introduire dans l'enceinte 5, il va s'ensuivre, en raison de la température basse des gaz de pétrole liquéfié qui se trouvent dans la partie basse de l'intérieur de la cuve, que de l'eau de condensation apparaît sur la surface extérieure de la cuve, et en particulier dans le fond de la cuve où la température est la plus basse. Cette apparition d'eau est détectée par le détecteur 7 d'apparition d'eau. Par l'intermédiaire des conducteurs 8,9, l'information que de l'eau a été détectée est transmise à la lampe 25 qui permet à l'utilisateur de savoir qu'une intervention est nécessaire pour éviter une corrosion à venir de la cuve 2.

Dans les conditions normales (pas d'apparition d'eau), la conductibilité du sel hygroscopique entre les deux électrodes 15,16 est très faible et aucun courant ne passe dans les conducteurs 8,9 d'autant que deux résistances 34,35 de forte valeur sont montées en série respectivement avec chaque électrode.

Si de l'eau apparaît sur la couche 14 de sel du détecteur 7, sa conductibilité augmente fortement et il s'ensuit un passage de courant qui entre dans la base du transistor 22. Le courant sort amplifié de l'émetteur du transistor et entre dans la première branche 23A à deux états bistables du relais bistable qui passe alors de l'état NF (fermé) qui laisse passer le courant, à l'état NO (ouvert) qui empêche le courant de passer. Le courant qui vient de passer dans la première branche du relais bistable entre également dans la seconde branche 23B du relais bistable qui passe elle de l'état NO à l'état NF. Le circuit constitué de la source de courant électrique 24, de la lampe 25 et de l'interrupteur 26 manuel est alors fermé et du courant passe dans la lampe 25 si l'interrupteur 26 est fermé. L'utilisateur, en fermant cet interrupteur 26, est alors informé :
- si la lampe s'allume, que du courant est passé entre les électrodes depuis la dernière fois que le relais bistable 23 se trouvait dans sa position normale (branche A fermée, branche B ouverte), (en général la dernière visite) ;
- si la lampe ne s'allume pas et s'allume lorsqu'il ferme l'interrupteur 32 de vérification qu'aucun courant n'a circulé depuis la dernière fois que le relais bistable a été mis en position normale.

L'interrupteur 32 court-circuite les électrodes et permet au courant de passer entre elles. En le fermant, l'utilisateur peut alors vérifier que le moyen 10 d'information fonctionne normalement, si la lampe s'allume. Si celle-ci ne s'allume pas, c'est qu'un défaut existe dans le moyen 10 d'information (câble défectueux, composants défectueux, etc ...) et une intervention y est nécessaire.

Une fois ces contrôles réalisés, l'utilisateur réouvre l'interrupteur 26 manuel et ferme pendant un bref instant l'interrupteur 27 de remise à zéro qui réenclenche le relais bistable dans sa position normale en alimentant la bobine 29 auxiliaire du relais.

Grâce à l'interrupteur 26 et à la branche 23a, la source de courant électrique ne débite pas pendant tout le temps entre l'instant où de l'eau est apparu et l'instant où l'utilisateur procédé à ses opérations. Cela permet dès lors de s'assurer d'une durée de vie très longue de la pile.

Lorsque l'utilisateur ferme l'interrupteur 26 et que la lampe s'allume, cela est le signe d'une anomalie. Une condensation a pu se produire, comme cela a été décrit ci-dessus. Une autre cause est que le détecteur 7 s'est détaché de la surface de la cuve 2. En effet, si cela vient à se produire, l'interrupteur 18 à ressort a son ressort qui se décomprime amenant ainsi l'interrupteur en position fermée. Du courant passe alors entre les deux électrodes et celui-ci met la lampe 25 sous tension de la même manière que si une condensation était apparue.

Ainsi, lorsqu'en appuyant sur l'interrupteur 26, l'utilisateur voit la lampe 25 s'allumer, il sait qu'une intervention est nécessaire dans l'enceinte étanche pour soit déshumidifier l'enceinte, soit pour refixer le détecteur à la cuve.

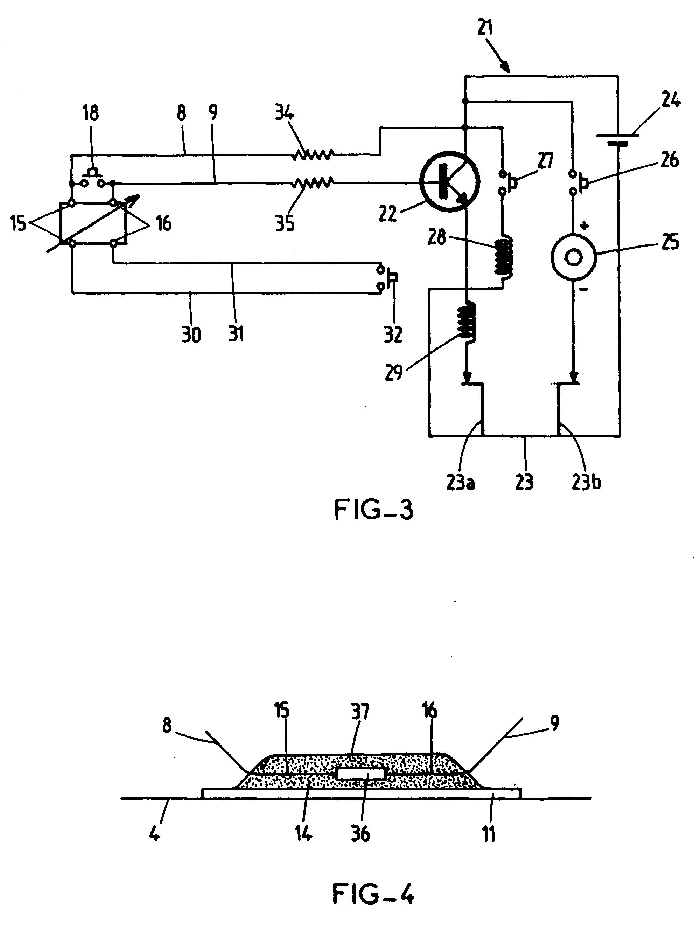

A la figure 4, une résistance 36 est montée entre les électrodes (15,16) dans le sel hygroscopique 14 à l'intérieur d'une gaine 37 en un matériau fortement absorbeur d'eau et à faible désorption.

Lorsque des condensations se produisent sur la surface extérieure de la cuve de la citerne, l'eau condensée pénètre avec facilité le matériau de la gaine et modifie la résistance du sel hygroscopique en l'amenant à une valeur inférieure à celle de la résistance 36. De cette façon, la constatation de la présence de condensation peut être vérifiée par une simple mesure de résistance.

Trois cas peuvent se présenter :
1°) la valeur de la résistance globale est supérieure à celle de la résistance 36 : le détecteur 7 est en défaut par suite d'une rupture de circuit, etc ...
2°) la valeur de la résistance globale correspond à celle de la résistance 36 : le détecteur 7 fonctionne et il n'y a pas eu de condensation.
3°) la valeur de la résistance globale est inférieure à celle de la résistance 36 : il y a eu condensation.

## Revendications

1. Citerne comprenant une cuve (2), une enveloppe (3) entourant au moins une partie de la cuve (2) et un détecteur (7) dans l'intervalle compris entre la cuve et l'enveloppe (3), caractérisée par des moyens (10) d'information reliés au détecteur (7), disposés à l'extérieur de l'enveloppe (7), aptes à donner une information sur l'apparition d'eau, notamment de condensation détectée par le détecteur (7) et comprenant un moyen (23b) de mémorisation de l'apparition d'eau détectée par le détecteur (7).

2. Citerne suivant la revendication 1, caractérisée en ce que les moyens (10) d'information comprennent un circuit électrique alimenté par une source (24) de courant et il est prévu un moyen (23a et 26) destiné à empêcher la source (24) de débiter du courant après que le détecteur (7) a détecté l'apparition d'eau.

3. Citerne suivant la revendication 2, caractérisée en ce que le circuit (21) électrique du moyen d'information comprend, comme moyen de mémorisation un moyen (23b) pour mémoriser que du courant y est passe, le circuit électrique étant de préférence constitué d'un tripôle (22), par exemple un transistor, tel que si du courant entre par un premier pôle, le dipôle constitué des deuxième et troisième pôles est conducteur et que si aucun courant n'entre par le premier pôle, le dipôle n'est pas conducteur, dont le premier pôle est relié à une électrode (16), un pôle parmi les deuxième et troisième pôles est relié à une autre électrode (15), d'un interrupteur (23b) de mémorisation à deux positions fermée et ouverte, qui laisse et ne laisse pas respectivement passer le courant, initialement en position ouverte et qui passe en position fermée lorsqu'un courant sort du pôle du tripôle (22) qui n'est pas relié à une électrode, d'une source de courant électrique (24) et d'un moyen (25) de détection du passage du courant, le pôle du tripôle non relié à une électrode étant relié à une des bornes de la source de courant électrique (24) et à une des bornes de l'interrupteur (23b), l'autre borne de l'interrupteur (23b) étant relié au moyen (25) de détection du passage de courant, lui-même relié au pôle du dipôle qui est relié à une électrode et à l'autre borne de la source de courant électrique.

4. Citerne suivant les revendications 2 et 3, caractérisée en ce que le circuit électrique comprend également un second interrupteur (23a) de non débit à deux positions, commandable par le courant, initialement en position fermée et passant en position ouverte lorsque un courant sort du pôle du tripôle (27) qui n'est pas relié à une électrode, monté entre le pôle du tripôle qui n'est pas relié à une électrode et l'entrée du premier interrupteur à deux positions (23a) et un interrupteur (26) commandant le passage du courant dans le moyen (25) de détection du passage de courant, les deux interrupteurs commandables par le courant pouvant être de préférence remplacés par un relais (23) bistable à deux branches (23a, 23b), chacune ayant deux états stables, ouvert et fermé, la première étant initialement en position fermée et la seconde en position ouverte.

5. Citerne suivant l'une des revendications précédentes, caractérisée par un moyen (32) de vérification du bon fonctionnement du moyen d'information (10).

6. Citerne suivant la revendication 5, caractérisée en ce que le moyen de vérification est constitué de deux conducteurs (30,31) partant chacun d'une électrode et d'un interrupteur (32) de vérification monté entre les deux conducteurs ou d'une résistance (36) montée en série entre les électrodes.

7. Citerne suivant l'une des revendications précédentes, caractérisée par un moyen (18) indiquant que le détecteur (7) n'est plus en relation d'échange thermique avec la partie de la surface extérieure (4) de la cuve, ce moyen (18) étant constitué de préférence d'un interrupteur, relié aux électrodes par deux conducteurs (19,20), qui se ferme lorsque le détecteur (7) s'éloigne de la partie de la surface extérieure de la cuve.

8. Citerne suivant l'une des revendications précédentes, caractérisée en ce que le moyen d'information (10) et/ou le moyen (23b) de mémorisation et/ou le moyen (32) de vérification du bon état de fonctionnement du détecteur n'est/ne sont pas enterré(s).

## Patentansprüche

1. Tank, umfassend eine Wanne (2), eine Hülle (3), die mindestens einen Teil der Wanne (2) umgibt, und einen Detektor (7) in einem Zwischenraum zwischen der Wanne und der Hülle (3),
gekennzeichnet durch
Informationsmittel (10), die mit dem Detektor (7) verbunden und außerhalb der Hülle (7) angeordnet sind, welche Information über das Vorhandensein von Wasser, insbesondere Kondensationswasser, welches von dem Detektor (7) erfasst wird, geben können und ein Speichermittel (23b) für das Vorhandensein von Wasser, das von dem Detektor (7) erfasst wird, aufweisen.

2. Tank nach Anspruch 1,
dadurch gekennzeichnet,
dass die Informationsmittel (10) einen Stromkreis umfassen, der von einer Stromquelle (24) gespeist wird, und dass ein Mittel (23a und 26) vorgesehen ist, das dazu bestimmt ist, die Stromquelle (24) an einer Stromabgabe zu hindern, nachdem der Detektor (7) das Vorhandensein von Wasser erfasst hat.

3. Tank nach Anspruch 1 oder 2,
dadurch gekennzeichnet,
dass der Stromkreis (21) des Informationsmittels ein Mittel (23b) zur Speicherung nur des durchgeflossenen Stroms umfasst, wobei der Stromkreis vorzugsweise aus einem Tripol (22), beispielsweise einem Transistor, gebildet ist, wobei, wenn Strom durch einen ersten Pol eintritt, der aus dem zweiten und dritten Pol gebildete Dipol leitend ist, und wenn kein Strom durch den ersten Pol eintritt, der Dipol nicht leitend ist, dessen erster Pol mit einer Elektrode (16) und einer von dem zweiten oder dritten Pol mit einer weiteren Elektrode (15) verbunden ist, sowie aus einem Speicherschalter (23b) mit zwei Positionen, einer geschlossenen und einer offenen, in welcher Strom fließt bzw. nicht fließt, der sich ursprünglich in der offenen Position befindet und in die geschlossene Position übergeht, wenn Strom aus dem Pol des Tripols (22) austritt, der nicht mit einer Elektrode verbunden ist, sowie aus einer elektrischen Stromquelle (24) und einem Mittel (25) zur Erfassung des Stromdurchflusses, wobei der Pol des Tripols, der nicht mit einer Elektrode verbunden ist, mit einer der Klemmen der elektrischen Stromquelle (24) und einer der Klemmen des Speicherschalters (23b) verbunden ist, das seinerseits mit dem Pol des Dipols verbunden ist, der mit einer Elektrode und der anderen Klemme der elektrischen Stromquelle verbunden ist.

4. Tank nach den Ansprüchen 2 und 3,
dadurch gekennzeichnet,
dass der Stromkreis einen zweiten Schalter für keinen Stromdurchfluß (23a) mit zwei Positionen umfasst, der durch den Strom steuerbar ist und sich ursprünglich in geschlossener Position befindet und in die offene Position übergeht, wenn Strom aus dem Pol des Tripols (27) austritt, der nicht mit einer Elektrode verbunden ist, und der zwischen dem Pol des Tripols, der nicht mit einer Elektrode verbunden ist, und dem Eingang des ersten Speicherschalters mit zwei Positionen (23a) angeordnet ist, sowie einen Schalter (26), der den Stromdurchfluß in dem Mittel (25) zur Erfassung des Stromdurchflusses steuert, wobei die beiden durch Strom steuerbaren Schalter vorzugsweise durch ein bistabiles Relais (23) mit zwei Zweigen (23a, 23b) ersetzt werden können, welche jeweils zwei stabile Zustände, einen offenen und einen geschlossenen, aufweisen, wobei sich der erste ursprünglich in geschlossener Position und der zweite in offener Position befindet.

5. Tank nach einem der vorhergehenden Ansprüche,
gekennzeichnet durch
ein Mittel (32) zur Überprüfung des ordnungsgemäßen Betriebs des Informationsmittels (10)

6. Tank nach Anspruch 5,
dadurch gekennzeichnet,
dass das Überprüfungsmittel aus zwei Leitungen (30,31) besteht, die jeweils von einer Elektrode und einem Überprüfungsschalter (32), der zwischen den beiden Leitungen angeordnet ist, oder von einem zwischen den Elektroden in Serie geschalteten Widerstand (36) ausgehen

7. Tank nach einem der vorhergehenden Ansprüche,
gekennzeichnet durch
Mittel (18), das anzeigt, dass sich der Detektor (7) nicht mehr in Wärmekontakt mit dem Teil der Außenfläche (4) der Wanne befindet, wobei dieses Mittel (18) vorzugsweise von einem Schalter gebildet wird, der mit den Elektroden durch zwei Leitungen (19,20) verbunden ist und sich schließt, wenn sich der Detektor (7) von dem Teil der Außenfläche der Wanne entfernt.

8. Tank nach einem der vorhergehenden Ansprüche,
dadurch gekennzeichnet,
dass das Informationsmittel (10) und/oder das Speichermittel (23b) und/oder das Mittel (32) zur Überprüfung des ordnungsgemäßen Betriebszustandes des Detektors nicht unterirdisch verlegt ist/sind.

## Claims

1. Storage tank comprising a vessel (2), a casing (3) surrounding at least a part of the vessel (2) and a detector (7) disposed between the vessel and the casing (3), characterized by information means (10) connected to the detector (7), disposed outside of casing (7), capable to give an information concerning the appearance of water, in particular condensation water, detected by the detector (7) and comprising memory-storage means (23b) for memory-storage of the fact that appearance of water has been detected by the detector (7).

2. Storage tank according to claim 1, characterized in that said information means (10) comprise an electrical circuit power-supplied by a current source (24) and means (23a and 26) are provided for preventing source (24) from supplying current after the detector (7) has detected an appearance of water.

3. Storage tank according to claim 2, characterized in that the electrical circuit (21) of the information means comprises, as memory-storage means, a means (23b) for remembering that current has passed therein, the electrical circuit comprising a tripole (22), for instance a transistor, such that if current enters via a first pole, the dipole consisting of the second and third poles is conducting and that, if no current enters via the first pole, the dipole is not conducting, in which the first pole is connected to an electrode (16), one pole of the second and third poles is connected to the other electrode (15); a memory-storage switch (23b) with two positions, closed and open, which allows and does not allow current to pass respectively, initially in open position and which passes to closed position when a current leaves the pole of the tripole (22) which is not connected to an electrode; an electric current source (24) and a means (25) for detecting the passage of the current, the pole of the tripole which is not linked to an electrode being connected to one of the terminals of the electric current source (24) and to one of the terminals of the switch (23b), the other terminal of the switch (23b) being connected to the means (25) for detecting the passage of current, itself connected to the pole of the dipole which is connected to an electrode and to the other terminal of the electric current source.

4. Storage tank according to claim 2 and 3, characterized in that the electrical circuit also comprises a second non-supply, two-position switch (23a), controllable by the current, initially in closed position and passing to open position when a current leaves the pole of the tripole (27) which is not linked to an electrode, mounted between the pole of the tripole which is not connected to an electrode and the input of the first two-position switch (23a), and a switch (26) controlling the passage of the current in the means (25) for detecting the passage of current, the two switches controllable by the current possibly preferably being replaced by a bistable relay (23) with two branches (23a,23b), each having two stable states, open and closed, the first being initially in closed position and the second in open position.

5. Storage tank according to any of claims 1 to 4, characterized in that a means (32) is provided for verifying the correct operation of the information means (10) .

6. Storage tank according to claim 5, characterized in that the verification means comprises two conductors (30,31) each starting from an electrode and a verification switch (32) mounted between the two conductors, or a resistor (36) mounted in series between the electrodes.

7. Storage tank according to any of claims 1 to 6, characterized in that a means (18) is provided for indicating that the detector (7) is no longer in a heat-exchange relation with the part of the outer surface (4) of the vessel, the means indicating that the detector is no longer in a heat-exchange relation comprising preferably a switch, connected to the electrodes by two conductors (19,20), which is closed when the detector (7) moves away from the part of the outer surface of the vessel.

8. Storage tank according to any of claims 1 to 7, characterized in that the information means (10) and/or the memory-storage means (23b) and/or the verification means (32) for verifying the correct operation of the information means is/are not buried
